# EUROPÄISCHE PATENTSCHRIFT

(11) **EP 3 166 904 B1**
(45) Veröffentlichungstag und Bekanntmachung des Hinweises auf die Patenterteilung: **20.03.2024**
(21) Anmeldenummer: 15741136.4
(22) Anmeldetag: 10.07.2015
(51) Int. Cl.: C04B 28/02, C04B 18/02, B28B 1/00, B28B 13/02, C04B 111/00

(54) **VERFAHREN ZUM HERSTELLEN VON BETONELEMENTEN**
METHOD FOR PRODUCING CONCRETE ELEMENTS
PROCÉDÉ DE FABRICATION D'ÉLÉMENTS EN BÉTON

(30) Priorität: 11.07.2014 DE 102014010259
(43) Veröffentlichungstag der Anmeldung: 17.05.2017
(73) Patentinhaber: METTEN Technologies GmbH & Co. KG, 51491 Overath (DE)
(72) Erfinder: METTEN, Michael, 51467 Bergisch Gladbach (DE)
(74) Vertreter: Cohausz & Florack
(86) Internationale Anmeldenummer: PCT/EP2015/065852
(87) Internationale Veröffentlichungsnummer: WO 2016/005566

(56) Entgegenhaltungen:
- WO-A1-99/57076
- CN-A- 1 144 784
- DE-A1- 10 146 408
- DE-A1-102004 062 656
- DE-A1-102009 036 481
- DE-U1-202009 013 082

## Beschreibung

Die Erfindung betrifft ein Verfahren zum Fertigen von Betonelementen wie Betonsteinen oder Betonplatten verschiedener Formate und Größen, die mindestens eine Betonschicht aufweisen, bei dem in eine Form für mindestens ein Element Beton eingefüllt wird, der Beton mittels Vibration und/oder mittels Stempeln verdichtet wird und anschließend aushärtet, wobei auf die Betonschicht vor dem Verdichten mittels einer Aufbringvorrichtung zumindest eine Portion eines körnigen Materials aufgebracht wird. Die Erfindung betrifft ferner mit diesem Verfahren hergestellte Betonelemente.

Betonsteine werden heutzutage für eine Vielzahl von Anwendungen, vornehmlich in der Baubranche, eingesetzt. Dabei wird vor allem die Vielseitigkeit dieses Materials geschätzt. Zum einen können seine Eigenschaften durch verschiedene Zusätze auf einfache Weise verändert werden. Zum anderen lässt sich auch das äußere Erscheinungsbild durch geeignete Herstellungsverfahren beeinflussen.

Ein wichtiger Grundbestandteil für Beton ist Zement. Der Zement dient vor allem als Bindemittel für die eingesetzten Zusätze wie z.B. die Zuschlagstoffe. Bei der Herstellung von Beton hat der sogenannte Wasser-Bindemittel-Wert (w/b-Wert) einen großen Einfluss auf die Eigenschaften des erhaltenen Produkts. Dieser Wert beschreibt das Verhältnis zwischen der Masse des Anmachwassers und der Masse des Bindemittels (üblicherweise Zement) einer verdichteten Mischung. Bei Verwendung von Zusatzstoffen wie Hüttensand, Puzzolan, Flugasche, Kalkstein, Steinkohlenflugasche oder Silikastaub ist für die Masse des Bindemittels bei der Berechnung des w/b-Wertes nicht nur die Masse des reinen Zements ausschlaggebend, sondern auch die Masse dieser Zusatzstoffe, welche zur Masse des Zements dazugezählt werden muss.

Abhängig vom Waser-Bindemittel-Wert werden verschiedene Arten von Beton mit unterschiedlichen mechanischen Eigenschaften, besonders in Bezug auf die Druckfestigkeit des Betons, erhalten.

Beim Erhärten kann ein typischer Zement circa 40% seiner Masse an Wasser binden. Dies entspricht einem w/b-Wert von 0,40. Bei einem w/b-Wert über 0,4 ist mehr Wasser in der Mischung vorhanden, als der Zement binden kann. Daher bilden sich verstärkt Poren im Beton, wodurch die Druckfestigkeit herabgesetzt werden kann. Außerdem nimmt die Frostempfindlichkeit zu. Je geringer der w/b-Wert ist, umso steifer und schlechter verarbeitbar ist der Beton. Zudem besteht bei tiefen w/b-Werten die Gefahr, dass nicht das gesamte Bindemittel aushärtet, wodurch die Druckfestigkeit sinkt.

Weiterhin wird die Oberfläche von Betonsteinen oft z.B. mit Epoxidharzen imprägniert oder versiegelt. Damit kann der Betonstein gegenüber Umwelteinflüssen, z.B. einem Eindringen von Wasser, geschützt werden, was die Lebensdauer des Betonelements erhöht. Jedoch sind mit der Versiegelung der Betonelemente zusätzliche Arbeitsschritte verbunden, die die Kosten für die Herstellung der Betonelemente erhöhen.

Bei der Herstellung von Betonsteinen ist es üblich, zunächst den Rohbeton für Betonsteine und Betonplatten in die Formen einzufüllen, anschließend den Vorsatzbeton einzufüllen und dann die Betonsteine bzw. Betonplatten zu verdichten.

Es ist aber auch möglich, die Betonsteine bzw. Betonplatten in einem einstufigen Verfahren ohne Vorsatzbeton herzustellen.

Dabei ist es bekannt, der Oberflächenschicht bei dem einstufigen Verfahren bzw. der Vorsatzbetonschicht je nach Wunsch eine Grundfarbe zu geben, die ohne Einfärbung der Betonfarbe entsprechen kann oder mit verschiedenen Farben eingefärbt ist, um verschiedenfarbige Betonsteine oder Betonplatten herzustellen.

Aus der EP 1017 554 B1 ist weiterhin bekannt, den die Vorsatzschicht bildenden Betonmörtel durch verschieden eingefärbte Schichten herzustellen, die übereinander im Vorratsbehälter gelagert werden und im Vorratsbehälter frei abwärts bewegt werden, sich dabei vermischen und über Prallkörper geleitet auf den Grobbeton gelangen, um eine marmorierte Vorsatzschicht zu bilden, die anschließend verdichtet wird. Es handelt sich dabei um ein funktionsfähiges Verfahren, bei dem aber verschiedenfarbig marmorierte Partien entstehen, die den optischen Anforderungen an Betonsteine bzw. Betonplatten, die Natursteinen ähnlich sehen sollen, nur im begrenztem Maße nahe kommen, da nur fleckenartige Farbgebilde entstehen.

EP-A-1 431 014 beschreibt ein Verfahren zur Herstellung von modularen Elementen, bei dem auf die Betonoberschicht oder die Vorsatzbetonschicht Kügelchen aufgebracht, gestreut oder gelagert werden, die aus reinem Glas, halb reinem Glas oder vergüteter Keramik bestehen. Die Kügelchen werden durch einen Verdichtungsvorgang in die Betonoberschicht oder Vorsatzbetonschicht eingebettet. Die Elemente sind zur Verwendung im Straßenverkehr bestimmt, wobei die Kügelchen das Licht von Fahrzeugen reflektieren sollen, um die Verkehrssicherheit zu erhöhen.

Die EP-A-0 813 942 beschreibt ein Verfahren zum Herstellen von Formteilen und zeigt eine Presse zur Ausführung des Verfahrens. Dabei soll ein Verfahren und eine Presse zur Verfügung gestellt werden, die erheblich höhere Drücke als die Vibrationsverdichtung oder Stempelpressung bei Formen erzeugt. Mit diesem hohen Druck sollen dann auch besondere Oberflächenmuster oder farbliche Kompositionen in der Außenschicht dargestellt werden, wobei in das Formteil auch eine Schicht ohne Bindemittelzusatz eingepresst werden kann. Dies wird, wie zu der Presse beschrieben, durch zusätzliche Füllschieber erreicht.

Aus der EP 1 827 784 B1 ist schließlich ein Verfahren zum Herstellen von Betonsteinen oder Betonplatten bekannt, bei dem auf die Oberflächen- oder Vorsatzbetonschicht vor dem Verdichten mittels zumindest einer Aufbringvorrichtung zumindest eine Portion eines eingefärbten und/oder unterschiedlich eingefärbten oder eines farbigen bzw. unterschiedlich farbigen körnigen Materials aufgeworfen wird.

Die DE 10 2004 062656 A1 beschreibt ein Verfahren zum Herstellen von Betonsteinen oder Betonplatten bekannt, bei dem auf die Oberflächen- oder Vorsatzbetonschicht vor dem Verdichten mittels zumindest einer Aufbringvorrichtung zumindest eine Portion eines eingefärbten und/oder unterschiedlich eingefärbten oder eines farbigen bzw. unterschiedlich farbigen körnigen Materials aufgeworfen wird.

Die WO 99/57076 beschreibt eine Trockenformulierung für ein integriertes Markierungsmaterial zur Anwendung auf Beton und Asphalt umfassend eine zementartige Mischung, die ein hydraulisches oder zementartiges Bindemittel, einen redispergierbaren polymeren Zementmodifikator, einen retroreflektierenden Füllstoff und optional einen reflektierenden Füllstoff enthält.

Die DE 20 2009 013 082 U1 beschreibt ein trivalent beschichtetes Glasgranulat, dadurch gekennzeichnet, dass die Beschichtung aus einem - ursprünglich wasserbasierten und gewünschtenfalls farbpigmentierten - Reaktionsharz gebildet ist, welches mit einem - ursprünglich wässrigen - organofunktionellen Siloxanoligomer angereichert ist, eine Panzerung aus sehr dünnen, einander überlagernden Glimmerschuppen enthält und über die gesamte Aussenoberfläche mit einer aus Zement und mineralischem Mehl gebildeten Haftbrücke umhüllt ist.

Die DE 101 46 408 A1 beschreibt ein Quarz-Farbkorn und ein Verfahren zur Herstellung eines Quarz-Farbkorns, mit dem eine kostengünstige Herstellung ermöglicht wird und wobei eine hohe Vielfalt und Reproduzierbarkeit der Farbeigenschaften erreicht wird.

Die CN 1144784 A beschreibt künstliche Farbsteinpartikel bestehend aus natürlichem Farbsteinpulver, Zement und Pigmenten, die gleichmäßig gerührt, in eine Granulierschale gefüllt, mit Wasser besprüht und dann zu sphärischen Partikeln gerollt werden, 24 Stunden lang aushärten, weiter in Wasser aushärten und gesiebt werden.

Die DE 10 2009 036 481 A1 beschreibt ein Granulat aus einer ausgehärteten Mischung, die eine transparente lichtechte Matrix umfasst, in der mindestens ein photolumineszierendes Leuchtpigment und ein transparenter Füllstoff enthalten sind, wobei der Füllstoff eine Korngröße von weniger als 30 µ und/oder eine Korngröße zwischen 70 µ und 1,2 mm aufweist.

Bei der Herstellung von Betonelementen mit einer Oberfläche, die gemaserten oder gesprenkelten Natursteinen ähnelt, ergeben sich häufig Probleme. So stellt zum einen die Haftung des aufgebrachten körnigen Materials auf der Oberfläche ein schwer zu lösendes Problem dar. Weiterhin soll das fertige Betonelement, im Besonderen seine Oberfläche, idealerweise eine hohe Verschleißfestigkeit aufweisen. Als wichtige Kriterien für die Bestimmung der Verschleißfestigkeit haben sich die Druckfestigkeit und die Abriebfestigkeit herausgestellt. Gerade eine hohe Abriebfestigkeit ist für Betonplatten mit aufgebrachtem körnigen Material für Bodenbeläge wichtig. Weiterhin ist bislang für eine erhöhte Lebensdauer der Betonelemente oft eine Imprägnierung/Versiegelung der Oberfläche der Betonelemente nötig. Dies bringt jedoch zusätzlich Arbeitsschritte und den Einsatz zusätzlicher Materialien mit sich, was die Herstellungskosten erhöht. Mit den bisher im Stand der Technik bekannten Verfahren lassen sich keine Betonelemente herstellen, die diese Nachteile überwinden.

Aufgabe der Erfindung ist es daher, ein Verfahren zur Verfügung zu stellen, mit dem Oberflächen von Betonsteinen bzw. Betonplatten hergestellt werden können, die gemaserten und/oder gesprenkelten Natursteinen sehr ähnlich sehen. Dabei soll eine strukturierte Oberfläche entstehen, bei der gerichtete Adern und/oder Maserungen und/oder Sprenkelungen dominieren. Zudem sollen die mit dem erfindungsgemäßen Verfahren hergestellten Betonelemente eine verbesserte Druckfestigkeit und/oder Abriebfestigkeit aufweisen. Schließlich soll es mit dem erfindungsgemäßen Verfahren möglich sein, Betonelemente herzustellen, deren Oberfläche nicht mehr versiegelt/imprägniert werden muss.

Diese Aufgabe wird erfindungsgemäß gelöst durch ein Verfahren zum Fertigen von Betonelementen, die mindestens eine Betonschicht aufweisen, bei dem in eine Form für mindestens ein Element Beton eingefüllt wird, der Beton mittels Vibration und/oder mittels Stempeln verdichtet wird und anschließend aushärtet, wobei auf die Betonschicht vor dem Verdichten mittels einer Aufbringvorrichtung zumindest eine Portion eines körnigen Materials aufgebracht wird, worin der in die Form eingefüllte Beton vor der Aushärtung auf einen Wasser-Bindemittel-Wert (w/b-Wert) von 0,31 bis 0,45 aufweist und als körniges Material ein Material enthaltend (a) eine Einstreukomponente mit einem mittleren Korndurchmesser von 0,1 bis 5 mm in einer Menge von 75 bis 85 Gew.% und (b) Bindemittel in einer Menge von 15 bis 25 Gew.%, jeweils bezogen auf die Gesamtzusammensetzung des körnigen Materials, eingesetzt wird,
wobei das körnige Material vor dem Aufbringen auf die Betonschicht einen Wasser-Bindemittel-Wert (w/b-Wert) von 0,24 bis 0,38 aufweist,
wobei die Betonschicht eine Vorsatzbetonschicht ist, und
wobei das Betonelement mindestens eine weitere Betonschicht aufweist.

Unter dem mittleren Korndurchmesser versteht der Fachmann denjenigen Durchmesser, bei dem es gleich viele Körner mit größerem und mit kleinerem Durchmesser gibt. Methoden zur Bestimmung des mittleren Korndurchmessers sind dem Fachmann bekannt.

Überraschend wurde gefunden, dass sich durch die Verwendung einer Einstreukomponente mit einem bestimmten mittleren Korndurchmesser (0,1 bis 5 mm) und einem bestimmten Bindemittelanteil (15 bis 25 Gew.%) in Kombination mit der Einstellung des in die Form eingebrachten Betons auf einen bestimmten w/b-Wert (0,31 bis 0,45) vor der Verdichtung Elemente mit besonders guten mechanischen Eigenschaften hinsichtlich ihrer Druck- und Abriebfestigkeit erzielen lassen. Aufgrund der mit dem erfindungsgemäßen Verfahren erzielten guten mechanischen Eigenschaften ist eine Imprägnierung/Versiegelung der Elemente nach dem Verdichten entbehrlich. Zudem lassen sich mit dem erfindungsgemäßen Verfahren die Betonelemente wirtschaftlich herstellen.

In einer bevorzugten Ausführungsform der Erfindung ist das Betonelement ein Betonstein, eine Betonplatte oder eine Betonstufe. Praktische Versuche haben gezeigt, dass sich das erfindungsgemäße Verfahren besonders gut zur Herstellung derartiger Betonelemente eignet. Dies ist insbesondere auf die guten mechanischen Eigenschaften hinsichtlich der Druck- und Abriebfestigkeit zurückzuführen. Weiterhin lassen sich auch durch das Einsparen eines Imprägnierungs- oder Versiegelungsschritts derartige Betonelemente besonders wirtschaftlich herstellen.

Als besonders praktikabel hat es sich im erfindungsgemäßen Verfahren erwiesen, wenn der in die Form eingefüllte Beton vor der Aushärtung auf einen Wasser-Bindemittel-Wert (w/b-Wert) von 0,35 bis 0,40 eingestellt wird bzw. diesen aufweist. Die Einstellung des w/b-Wertes des Betons erfolgt vorzugsweise bereits vor dem Einfüllen in die Form. Werte in diesem Bereich erlauben zum einen eine gute Verarbeitbarkeit des Betons. Zum anderen stellen sie sicher, dass genügend Wasser vorhanden ist, um das Bindemittel auszuhärten. Weiterhin wird eine Porosität des Betons bei Einstellung des w/b-Wertes im genannten Bereich erzielt, die sich günstig auf die Druckfestigkeit des Betonelements auswirkt.

Vorzugsweise beträgt im erfindungsgemäßen Verfahren der Zementanteil in der Betonschicht von 15 bis 25 Gew.%, bevorzugt von 17,5 bis 20,5 Gew.%, bezogen auf die Gesamtzusammensetzung der Betonschicht. Es wurde gefunden, dass bei Verwendung eines Zementanteils in der Betonschicht von weniger als 15 Gew.% die Zuschlagstoffe des Betons nicht genügend fest im Betonelement verankert sind. Hingegen genügten die mechanischen Eigenschaften bei einer Verwendung eines Zementanteils in der Betonschicht von mehr als 25 Gew.% nicht mehr den Anforderungen.

Erfindungsgemäß wird auf die Betonschicht, vorzugsweise die Vorsatzbetonschicht, vor dem Verdichten mittels einer Aufbringvorrichtung zumindest eine Portion eines körnigen Materials aufgebracht. Dabei beträgt im erfindungsgemäßen Verfahren der Wasser-Bindemittel-Wert (w/b-Wert) des körnigen Materials bzw. der Mischung aus körnigem Material und Wasser vor dem Aufbringen auf die Betonschicht 0,24 bis 0,38 bzw. ist darauf eingestellt. Mit einem w/b-Wert des körnigen Materials in diesem Bereich werden gute mechanische Eigenschaften des hergestellten Betonelements erzielt.

In Einsatzversuchen wurde gefunden, dass im erfindungsgemäßen Verfahren das körnige Material, das auf die Betonschicht, vorzugsweise die Vorsatzbetonschicht, aufgebracht wird, vorteilhafterweise eine Einstreukomponente und Bindemittel enthält.

Im erfindungsgemäßen Verfahrens enthält das körnige Material die Einstreukomponente in einer Menge von 75 bis 85 Gew.% und Bindemittel in einer Menge von 15 bis 25 Gew.%, jeweils bezogen auf die Gesamtzusammensetzung des körnigen Materials. Durch Verwendung der Einstreukomponente und Bindemittels in diesen Konzentrationsbereichen kann eine gute Verankerung des körnigen Materials auf der Betonschicht, vorzugsweise der Vorsatzbetonschicht, erreicht werden.

Gemäß einer bevorzugten Ausgestaltungsform des erfindungsgemäßen Verfahrens wird die Einstreukomponente mit einem organischen oder anorganischen Bindemittel angemischt. Das Bindemittel ist vorzugsweise farblos und wird vor dem Aufbringen mit der Einstreukomponente gemischt, wobei als organisches Bindemittel z.B. eine Acrylatdispersion und als anorganisches Bindemittel z.B. ein Silikat benutzt werden kann.

Die erfindungsgemäße Lehre kann nach einer weiteren besonders bevorzugten Ausführungsform dadurch verwirklicht werden, dass das im körnigen Material enthaltene Bindemittel ein anorganisches Bindemittel wie Zement, hydraulischer Kalk, Gips oder Wasserglas ist und/oder das Bindemittel im körnigen Material in einer Menge von 15 bis 25 Gew.%, bezogen auf die Gesamtzusammensetzung des körnigen Materials, enthalten ist. Derartige Bindemittel sind im Zusammenhang mit Betonelementen besonders einfach handzuhaben. Zudem stellen sie keine zusätzlichen Anforderungen an das Verfahren. Weiterhin stellen derartige Bindemittel eine gute Verankerung des körnigen Materials auf der Betonschicht, vorzugsweise der Vorsatzbetonschicht, sicher.

Das vorstehend zu anorganischen Bindemitteln Gesagte gilt in ähnlicher Weise auch für organische Bindemittel. So sieht eine besonders vorteilhafte Ausführungsform der Erfindung vor, dass das im körnigen Material enthaltene Bindemittel ein organisches Bindemittel wie Kunststoffdispersionen, Acrylatharze, Alkydharze, Epoxidharze, Polyurethane, SolGel-Harze oder Siloconharzemulsionen ist und/oder das Bindemittel im körnigen Material in einer Menge von 5 bis 35 Gew.%, bezogen auf die Gesamtzusammensetzung des körnigen Materials, enthalten ist.

Optimale Ergebnisse stellen sich im erfindungsgemäßen Verfahren ein, wenn als Einstreukomponente eine Einstreukomponente mit einem mittleren Korndurchmesser von 0,1 bis 1,8 mm eingesetzt wird, das Bindemittel im körnigen Material in einer Menge von 15 bis 25 Gew.%, bezogen auf die Gesamtzusammensetzung des körnigen Materials, enthalten ist und/oder der Wasser-Bindemittel-Wert (w/b-Wert) des körnigen Materials bzw. der Mischung aus körnigem Material und Wasser 0,24 bis 0,33 beträgt bzw. auf diesen eingestellt wird. Auf diese Weise sind die mechanischen Eigenschaften der so erhaltenen Betonelemente sehr gut auf die jeweiligen Anforderungen angepasst.

Die erfindungsgemäße Lehre kann nach einer weiteren erfindungsgemäßen Ausführungsform des Verfahrens auch dadurch verwirklicht werden, dass als Einstreukomponente eine Einstreukomponente mit einem mittleren Korndurchmesser von 1,2 bis 5 mm eingesetzt wird, das Bindemittel im körnigen Material in einer Menge von 15 bis 20 Gew.%, bezogen auf die Gesamtzusammensetzung des körnigen Materials, enthalten ist und/oder der Wasser-Bindemittel-Wert (w/b-Wert) des körnigen Materials 0,28 bis 0,38 beträgt bzw. auf diesen eingestellt wird. Dies erlaubt eine besonders wirtschaftliche Herstellung der Betonelemente.

Vorzugsweise wird im erfindungsgemäßen Verfahren als Einstreukomponente eine Einstreukomponente mit einem mittleren Korndurchmesser von 0,1 bis 1,2 mm eingesetzt.

Wie bereits weiter oben beschrieben lassen sich mit dem erfindungsgemäßen Verfahren Betonelemente mit besonders guten mechanischen Eigenschaften erzielen.

In einer bevorzugten Ausführungsform des erfindungsgemäßen Verfahrens liegt die Druckfestigkeit der ausgehärteten Betonschicht, vorzugsweise der Vorsatzbetonschicht, bestimmt nach DIN EN 13369 im Bereich von 40 bis 85 N/mm², bevorzugt von 50 bis 60 N/mm². Eine Druckfestigkeit in diesem Bereich ist für viele Anwendungen von Vorteil. Zudem stellt sie eine lange Lebensdauer sicher.

Weiterhin hat sich in Einsatzversuchen ein Abriebwiderstand der ausgehärteten Betonschicht bestimmt nach DIN EN 1338, Anhang H oder DIN 52108, von kleiner 18cm³/5000mm², insbesondere kleiner 15cm³/5000mm² als besonders vorteilhaft gezeigt. Derartige Abriebwiderstände haben sich als besonders günstige für die Verschleißfestigkeit der Betonelemente erwiesen.

Gemäß einer weiteren Ausführungsform des erfindungsgemäßen Verfahrens beträgt die Wasseraufnahme der ausgehärteten Betonschicht bestimmt nach DIN EN 1338, Anhang E, kleiner 6 Masse %. Eine Wasseraufnahme in diesem Bereich ist vor allem für die Langzeitstabilität der Betonelemente vorteilhaft.

Vorzugsweise weist die Betonschicht eine Dichte von 1,5 bis 2,8, bevorzugt von 2,25 bis 2,45, bestimmt nach DIN EN 13369, auf.

Besonders praxisgerechte Ergebnisse wurden im erfindungsgemäßen Verfahren erhalten, wenn die Betonschicht eine Vorsatzbetonschicht ist. Dadurch kommt die Wirkung des aufgebrachten körnigen Materials besonders gut zu Geltung.

Gemäß einer bevorzugten Ausgestaltungsform kann die eingefärbte bzw. unterschiedlich eingefärbte Betonmischung oder auch der Vorsatzbeton oder die Beton-Oberflächenschicht kunststoffmodifiziert sein und/oder eine Silikat-BetonMischung aufweisen.

In einer besonders bevorzugten Ausführungsform des erfindungsgemäßen Verfahrens hat die Betonschicht, vorzugsweise die Vorsatzbetonschicht, einen feinkörnigen Kornaufbau, feiner oder gleich der Grenzsieblinie C4. C4 bezeichnet einen dem Fachmann bekannten feinkörnigen Kornaufbau von Körnungen zwischen 0 und 4,0 mm Durchmesser. Zur Beurteilung werden standardisierte Siebversuche mit festgelegten Siebmaschen durchgeführt.

Optimale Ergebnisse haben sich eingestellt, wenn im erfindungsgemäßen Verfahren das Betonelements, vorzugsweise der Betonstein oder die Betonplatte, mindestens eine weitere Betonschicht, insbesondere eine Rohbetonschicht, aufweist. Auf diese Weise können die mechanischen Eigenschaften gut an die Bedürfnisse der jeweiligen Anwendung angepasst werden. Zudem kann so eine größere Gestaltungsfreiheit des Betonelements, vorzugsweise des Betonsteins oder der Betonplatte, gewährleistet werden.

Gemäß einer weiteren bevorzugten Ausführungsform des erfindungsgemäßen Verfahrens enthält der Beton Betonzusatzstoffe wie Hüttensand, Puzzolan, Flugasche, Kalkstein, Steinkohlenflugasche und/oder Silikastaub. Aufgrund des geringen Preises dieser Betonzusatzstoffe lassen sich so Betonelemente besonders wirtschaftlich herstellen.

Um mit dem erfindungsgemäßen Verfahren ästhetisch besonders ansprechende Betonelemente herzustellen hat es sich als vorteilhaft erwiesen, wenn die Vorsatzbetonschicht eine optische Eigenschaft wie Farbe oder Glanzgrad aufweist und das körnige Material eine von dieser abweichende optische Eigenschaft aufweist. Dadurch besteht beispielsweise die Möglichkeit, geflammte, geäderte oder gesprenkelte Oberflächen zu erzeugen, die der natürlichen Struktur von Natursteinen ähnlich sehen.

In einer besonders bevorzugten Ausführungsform des erfindungsgemäßen Verfahrens wird auf die Betonschicht, vorzugsweise die Vorsatzbetonschicht, vor dem Verdichten mittels zumindest einer Aufbringvorrichtung zumindest eine Portion eines eingefärbten und/oder unterschiedlich eingefärbten oder eines farbigen bzw. unterschiedlich farbigen körnigen Materials aufgebracht. Dadurch wird die Möglichkeit, geflammte, geäderte oder gesprenkelte Oberflächen zu erzeugen, die der natürlichen Struktur von Natursteinen ähnlich sehen, verbessert. Durch Variationen der Aufbringvorrichtung, der Portion bzw. Portionen und des körnigen Materials können diese Oberflächen erzeugt bzw. variiert werden. Dabei spielt auch die Grundfarbe der Betonschicht, vorzugsweise der Vorsatzbetonschicht, eine Rolle, die von ungefärbtem Beton bis verschieden gefärbtem Beton reicht.

In besonders vorteilhafter Weise ist das körnige Material eine eingefärbte und/oder unterschiedlich eingefärbte Betonmischung, die aufgrund des Aufbringens auf die Oberfläche die besondere Optik ergibt. Dadurch, dass die Betonmischung anschließend in die Oberfläche eingedrückt bzw. dort verdichtet werden kann, kann eine gute Verbindung mit der Oberflächenschicht oder der Vorsatzbetonschicht erreicht werden.

Optimale Ergebnisse stellen sich im erfindungsgemäßen Verfahren ein, wenn das körnige Material durch Streuen oder Werfen aufgebracht wird. Vorteilhafterweise wird das körnige Material durch werfen, schleudern, schießen oder blasen aufgebracht.

Vorzugsweise können in einer aufgebrachten Portion unterschiedliche körnige Materialien, unterschiedlich eingefärbte Betonmischungen einschließlich Gesteinskörnern oder Gesteinmischungen oder Körnungen oder Späne oder Partikel enthalten sein.

Vorteilhafterweise können aber auch mehrere Portionen des gleichen oder unterschiedlichen körnigen Materials pro Portion auf die Form aufgebracht werden, sowie mehrere Portionen des Veredelungsmaterials hintereinander auf die Oberflächen einer Form.

In einer bevorzugten Ausführungsform des erfindungsgemäßen Verfahrens wird das körnige Material mittels einer Aufbringvorrichtung auf die Betonschicht aufgebracht, wobei die Aufbringvorrichtung zumindest eine Rieselvorrichtung, eine Schleuderscheibe, ein Schaufelrad, einen Wurfarm und/oder ein Katapult aufweist, denen mindestens eine Portion des körnigen Materials zugeführt wird. Diese und die im Folgenden noch beschriebenen Aufbringvorrichtungen können sich über die Form oder neben der Form bewegen und es können ihnen auch unterschiedliche Portionen mit unterschiedlichem Zeitabstand zugeführt werden. Auf diese Weise kann das körnige Material gleichmäßig auf die Betonschicht aufgebracht werden. Weiterhin hat sich herausgestellt, dass das erfindungsgemäße Verfahren auf diese Art besonders wirtschaftlich durchgeführt werden kann.

Vorteilhafterweise weist im erfindungsgemäßen Verfahren die Aufbringvorrichtung zumindest einen körniges Material enthaltenden Dosierbehälter mit einer Dosierleiste auf, wobei der Dosierbehälter mit gleichmäßiger oder ungleichmäßiger Geschwindigkeit über die Form geführt wird.

Dabei werden auf die Dosierleiste vorzugsweise Vibrationen oder Rüttelstöße ausgeübt, die gleichmäßig und/oder ungleichmäßig und/oder intermittierend ausgeführt werden.

Bevorzugt können der Dosierleiste entlang ihrer Erstreckung unterschiedliche Veredelungsmaterialien und/oder unterschiedliche Portionen Veredelungsmaterial zugeführt werden.

Weiterhin hat es sich auch als vorteilhaft erwiesen, wenn der Dosierbehälter an der Vorderkante des Dosierwagens für den Beton, vorzugsweise den Vorsatzbeton, angebracht wird.

Gemäß einer besonders bevorzugten Ausgestaltungsform des erfindungsgemäßen Verfahrens weist die Aufbringvorrichtung zumindest einen Rohrstutzen auf, dem eine oder mehrere Portionen eines körnigen Materials zugeführt werden und durch den diese auf die Betonschicht, vorzugsweise die Vorsatzbetonschicht, gestreut, geworfen, geschossen und/oder fallen gelassen werden. Eine besonders gute Verteilung auf die Form ergibt sich, wenn das Rohrstutzenende nach Art einer Düse ausgebildet ist.

Praktische Versuche haben gezeigt, dass es im erfindungsgemäßen Verfahren zu einer guten Verteilung auch beiträgt, wenn der Auswurf mittels eines vorgespannten, federbelasteten Kolbens erfolgt, dessen Verrieglung zum Werfen plötzlich gelöst wird.

Vorzugsweise kann die Aufbringvorrichtung über die Form oder neben der Form bewegt werden. Sie kann dabei unterschiedliche Bewegungsgeschwindigkeiten aufweisen bzw. erreichen, wobei auch ein ruckartiges Bewegen vorteilhaft sein kann. Je nach Größe der Form und je nach farblicher Bestückung der Aufbringvorrichtung mit körnigem Material können auch mehrere und auch unterschiedliche Vorrichtungen für eine Form benutzt werden, damit eine Vergleichmäßigung des Aufbringens oder ein spezielles charakteristisches Aufbringbild des körnigen Materials auf die Schichten erreicht wird.

Vorzugsweise werden bei den Aufbringvorrichtungen Leitbleche benutzt, da derartige Scheibenräder oder Wurfarme und auch Rohrstutzen eine größere Streuung haben können.

Durch die Aufbringvorrichtungen können mehrere Portionen des körnigen Materials hintereinander ausgeworfen werden, wobei es sich dabei um unterschiedliche körnige Materialien, wie zuvor beschrieben, handeln kann.

Das körnige Material kann auch kleine Gesteinskörner aufweisen oder enthalten, so dass verschiedenartige Materialien mit unterschiedlichen Farben, auch Körnungen von Halbedelsteinen oder Edelsteinen oder Glimmer oder Metallspäne oder Kunststoffpartikel oder Glaspartikel in die Oberflächen- oder Vorsatzbetonschicht eingebracht werden können. Das körnige Material kann auch eine beliebige Gesteinsmischung sein.

Als besonders praktikabel hat es sich im erfindungsgemäßen Verfahren erwiesen, wenn das Einstreumaterial eine Gesteinsmischung ist oder enthält. Hiermit können Betonelemente hergestellt werden, die dem Erscheinungsbild von Natursteinen sehr nahe kommen.

Vorzugsweise enthält im erfindungsgemäßen Verfahren das Einstreumaterial mindestens Material ausgewählt aus der Gruppe bestehend aus Halbedelsteinen, Edelsteinen, Glimmer, Metallspänen, Glas und Kunststoffpartikeln. Eine Verwendung dieser Materialien erlaubt ein sehr wirtschaftliches Verfahren.

Das körnige Material kann in einer bevorzugten Ausführungsform des erfindungsgemäßen Verfahrens eine abgestufte Kornzusammensetzung von max. 2 mm Korndurchmesser haben.

Vor, vorzugsweise aber nach dem Verdichten kann auf die Oberflächen der Betonelemente vor oder auch nach dem Aushärten ein organisches oder anorganisches Mittel, das vorzugsweise farblos ist, aufgebracht werden. Es handelt sich dabei um ein Imprägnieren, Versiegeln oder Beschichten der Betonelemente. Gemäß einer weiteren bevorzugten Ausgestaltungsform des erfindungsgemäßen Verfahrens wird auf die Oberfläche der Betonelemente nach dem Verdichten ein Versiegelungs- und/oder Imprägniermittel aufgebracht. Ein derartiges Vorgehen fügt den Betonelementen eine weitere Schutzschicht hinzu, die die Haltbarkeit und die Lebensdauer der Betonelemente zusätzlich weiter erhöht. Außerdem kann diese Schicht als Fleckenschutz wirken und Kalkausblühungen verhindern.

Vorteilhafterweise werden in einer besonders bevorzugten Ausführungsform des erfindungsgemäßen Verfahrens die Oberflächen und/oder die Ränder der Betonsteine oder Betonplatten nach dem Verdichten und vor dem Aushärten mit Bürsten bearbeitet und dabei strukturiert und/oder aufgeraut und/oder geglättet und/oder Überstände an den Rändern abgearbeitet. In einer bevorzugten Ausführungsform des erfindungsgemäßen Verfahrens werden die Oberflächen und /oder die Kanten der Oberflächen der Betonsteine oder Betonplatten nach der Endverdichtung und vor der Versiegelung mit Bürsten bearbeitet und dabei strukturiert und/oder aufgeraut und/oder geglättet und/oder überstehende Ränder abgearbeitet.

Weiterhin betrifft die Erfindung auch Betonsteine oder Betonplatten, die nach dem oben beschriebenen Verfahren erhältlich sind.

Zur weiteren Erläuterung der Erfindung wird auf die Zeichnung verwiesen, in der ein Ausführungsbeispiel der Erfindung vereinfacht dargestellt ist.

Es zeigt:

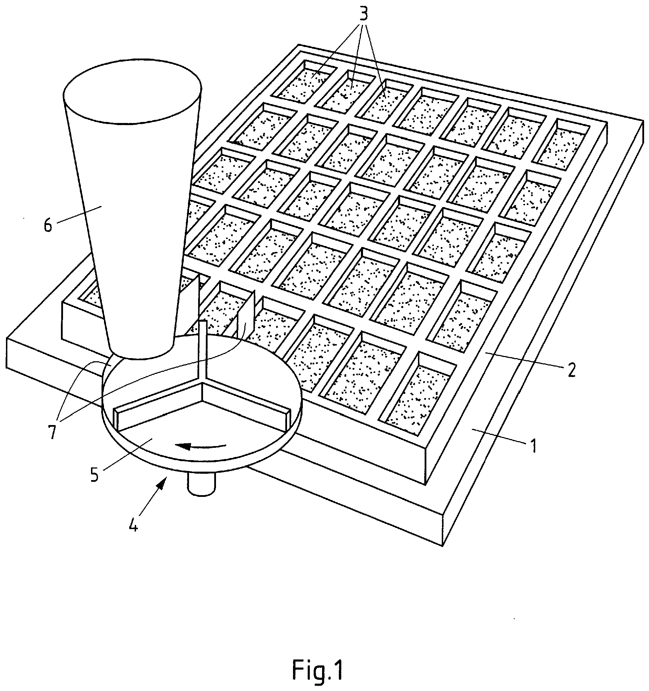

- Figur 1:: eine perspektivische Ansicht eines Formbrettes mit einer Form mit Betonsteinen und einer Auf bring Vorrichtung.

In der einzigen Figur ist mit 1 ein Formbrett bezeichnet, auf dem eine mit 2 bezeichnete Form angeordnet ist. Die Form 2 weist eine größere Anzahl von durchgehenden Öffnungen (35 Stück in der Figur) auf, in denen Rohbeton eingefüllt ist, auf dem eine mit 3 bezeichnete Vorsatzbetonschicht mit einem Wasser-Bindemittel-Wert (w/b-Wert) von 0,35, einem Größtkorn von 4 mm und einem Zementanteil in der Vorsatzbetonschicht von 19 Gew.%, bezogen auf die Gesamtzusammensetzung der Vorsatzbetonschicht, aufgebracht und sichtbar ist. Die Vorsatzbetonschicht ist, der Figur nicht entnehmbar, eingefärbt. Weiterhin ist mit 4 allgemein eine Aufbringvorrichtung bezeichnet, die eine mit 5 bezeichnete Schleuderscheibe beinhaltet. Die Ebene der Schleuderscheibe ist etwa parallel zur Oberfläche der Form 2. mit Abstand zu dieser ausgerichtet. Die Aufbringvorrichtung 4 kann sich entlang der in der Figur angeordneten Seite aber auch entlang der übrigen Seiten der Form bewegen, so dass alle Vorsatzbetonschichten 3 beliebig erreicht werden können. Oberhalb der Schleuderscheibe 5 ist ein mit 6 bezeichneter Trichter angeordnet, in dem, nicht sichtbar, körniges Material eingefüllt ist. Der Trichter 6 hat an seinem der Schleuderscheibe 5 zugewandten Ende (nicht sichtbar) eine Vorrichtung zum Öffnen und Schließen der Trichteröffnung, so dass beliebige Portionen des körnigen Materials auf die Schleuderscheibe geleitet werden können. Im vorliegenden Beispiel weist das körnige Material einen Wasser-Bindemittel-Wert (w/b-Wert) von 0,24 auf und enthält 80 Gew.% Einstreukomponente mit einem mittleren Korndurchmesser von 0,7 mm und 20 Gew.% Bindemittel. Es können oberhalb der Schleuderscheibe mehrere Trichter angeordnet sein, in denen unterschiedliche körnige Materialien enthalten sind, um die Oberflächen der Vorsatzbetonschichten 3 mit verschiedenen körnigen Materialien in verschiedenen Dosierungen bewerfen zu können. Auch die Drehzahl der Schleuderscheibe 5 und dessen Höhenlage zu der Form 2 kann beliebig verstellt und variiert werden, auch während der Wurfbewegung, ebenso die Bewegungsgeschwindigkeit entlang der Form. Auf diese Weise wurden Betonplatten mit einer Druckfestigkeit der ausgehärteten Betonschicht bestimmt nach DIN EN 13369 von 47 N/mm² hergestellt. Zudem wies die ausgehärtete Betonschicht der Betonplatten einen Abriebwiderstand gemäß DIN EN 1338, Anhang H von 8 cm³/5000mm² auf. Weiterhin hatte die ausgehärtete Betonschicht der Betonplatten gemäß DIN EN 13369 eine Dichte von 2,28 und nahm gemäß DIN EN 1338, Anhang E 4,4 Masse% Wasser auf.

Mit 7 ist weiterhin eine Leitvorrichtung bezeichnet, die das beliebige Abwerfen von körnigem Material durch die Schleuderscheibe, insbesondere außerhalb der Form 2, verhindert und die Wurfrichtung auf die Form 2 lenkt.

### Bezugszeichenliste

- 1: Formbrett
- 2: Form
- 3: Vorsatzbetonschichten
- 4: Aufbringvorrichtung
- 5: Schleuderscheibe
- 6: Trichter
- 7: Leitvorrichtung

## Patentansprüche

1. Verfahren zum Fertigen von Betonelementen, die mindestens eine Betonschicht aufweisen, bei dem in eine Form für mindestens ein Element Beton eingefüllt wird, der Beton mittels Vibration und/oder mittels Stempeln verdichtet wird und anschließend aushärtet, wobei auf die Betonschicht vor dem Verdichten mittels einer Aufbringvorrichtung zumindest eine Portion eines körnigen Materials aufgebracht wird, **dadurch gekennzeichnet, dass** der in die Form eingefüllte Beton vor der Aushärtung einen Wasser-Bindemittel-Wert (w/b-Wert) von 0,31 bis 0,45 aufweist und als körniges Material ein Material enthaltend (a) eine Einstreukomponente mit einem mittleren Korndurchmesser von 0,1 bis 5 mm in einer Menge von 75 bis 85 Gew.% und (b) Bindemittel in einer Menge von 15 bis 25 Gew.%, jeweils bezogen auf die Gesamtzusammensetzung des körnigen Materials, eingesetzt wird,
wobei das körnige Material vor dem Aufbringen auf die Betonschicht einen Wasser-Bindemittel-Wert (w/b-Wert) von 0,24 bis 0,38 aufweist,
wobei die Betonschicht eine Vorsatzbetonschicht ist, und
wobei das Betonelement mindestens eine weitere Betonschicht aufweist.

2. Verfahren nach Anspruch 1, **dadurch gekennzeichnet, dass** das Betonelement ein Betonstein, eine Betonplatte oder eine Betonstufe ist.

3. Verfahren nach einem der vorstehenden Ansprüche, **dadurch gekennzeichnet, dass** der in die Form eingefüllte Beton vor der Aushärtung einen Wasser-Bindemittel-Wert (w/b-Wert) von 0,35 bis 0,40 aufweist.

4. Verfahren nach einem der vorstehenden Ansprüche, **dadurch gekennzeichnet, dass** der Zementanteil in der Betonschicht 15 bis 25 Gew.%, insbesondere 17,5 bis 20,5 Gew.%, bezogen auf die Gesamtzusammensetzung der Betonschicht, beträgt.

5. Verfahren nach einem der vorstehenden Ansprüche, **dadurch gekennzeichnet, dass** das im körnigen Material enthaltene Bindemittel ein anorganisches Bindemittel wie Zement, hydraulischer Kalk, Gips oder Wasserglas ist.

6. Verfahren nach einem der Ansprüche 1 bis 4, **dadurch gekennzeichnet, dass** das im körnigen Material enthaltene Bindemittel ein organisches Bindemittel wie Kunststoffdispersionen, Acrylatharze, Alkydharze, Epoxidharze, Polyurethane, SolGel-Harze oder Siloconharzemulsionen ist.

7. Verfahren nach einem der Ansprüche 1 bis 4, **dadurch gekennzeichnet, dass** als Einstreukomponente eine Einstreukomponente mit einem mittleren Korndurchmesser von 0,1 bis 1,8 mm eingesetzt wird und/oder der Wasser-Bindemittel-Wert (w/b-Wert) des körnigen Materials 0,24 bis 0,33 beträgt.

8. Verfahren nach einem der Ansprüche 1 bis 4, oder 6, **dadurch gekennzeichnet, dass** als Einstreukomponente eine Einstreukomponente mit einem mittleren Korndurchmesser von 1,2 bis 5 mm eingesetzt wird, das Bindemittel im körnigen Material in einer Menge von 15 bis 20 Gew.%, bezogen auf die Gesamtzusammensetzung des körnigen Materials, enthalten ist und/oder der Wasser-Bindemittel-Wert (w/b-Wert) des körnigen Materials 0,28 bis 0,38 beträgt.

9. Verfahren nach einem der Ansprüche 1 bis 7, **dadurch gekennzeichnet, dass** als Einstreukomponente eine Einstreukomponente mit einem mittleren Korndurchmesser von 0,1 bis 1,2 mm eingesetzt wird.

10. Verfahren nach einem der vorstehenden Ansprüche, **dadurch gekennzeichnet, dass** die weitere Betonschicht eine Rohbetonschicht ist.

11. Verfahren nach einem der vorstehenden Ansprüche, **dadurch gekennzeichnet, dass** der Beton Betonzusatzstoffe wie Hüttensand, Puzzolan, Flugasche, Kalkstein, Steinkohlenflugasche und/oder Silikastaub enthält.

12. Verfahren nach einem der vorstehenden Ansprüche, **dadurch gekennzeichnet, dass** die Vorsatzbetonschicht eine optische Eigenschaft wie Farbe oder Glanzgrad aufweist und das körnige Material eine von dieser abweichende optische Eigenschaft aufweist.

13. Verfahren nach einem der vorstehenden Ansprüche, **dadurch gekennzeichnet, dass** das körnige Material durch Streuen oder Werfen aufgebracht wird.

14. Verfahren nach einem der vorstehenden Ansprüche, **dadurch gekennzeichnet, dass** das körnige Material mittels einer Aufbringvorrichtung auf die Betonschicht aufgebracht wird, wobei die Aufbringvorrichtung zumindest eine Rieselvorrichtung, eine Schleuderscheibe, einen Wurfarm und/oder ein Katapult aufweist, denen mindestens eine Portion des körnigen Materials zugeführt wird.

15. Verfahren nach einem der vorstehenden Ansprüche, **dadurch gekennzeichnet, dass** die Aufbringvorrichtung zumindest einen körniges Material enthaltenden Dosierbehälter mit einer Dosierleiste aufweist, wobei der Dosierbehälter mit gleichmäßiger oder ungleichmäßiger Geschwindigkeit über die Form geführt wird.

16. Verfahren nach einem der vorstehenden Ansprüche, **dadurch gekennzeichnet, dass** die Aufbringvorrichtung zumindest einen Rohrstutzen aufweist, dem eine oder mehrerer Portionen eines körnigen Materials zugeführt werden und durch den diese auf die Betonschicht gestreut, geworfen, geschossen und/oder fallen gelassen werden.

17. Verfahren nach einem der vorstehenden Ansprüche, **dadurch gekennzeichnet, dass** das Einstreumaterial eine Gesteinsmischung ist oder enthält.

18. Verfahren nach einem der vorstehenden Ansprüche, **dadurch gekennzeichnet, dass** das Einstreumaterial mindestens Material ausgewählt aus der Gruppe bestehend aus Halbedelsteinen, Edelsteinen, Glimmer, Metallspänen, Glas und Kunststoffpartikeln enthält.

19. Verfahren nach einem der vorstehenden Ansprüche, **dadurch gekennzeichnet, dass** auf die Oberfläche der Betonsteine oder Betonplatten nach dem Verdichten ein Versiegelungs- und/oder Imprägniermittel aufgebracht wird.

20. Verfahren nach einem der vorstehenden Ansprüche, **dadurch gekennzeichnet, dass** die Oberflächen und/oder die Ränder der Betonsteine oder Betonplatten nach dem Verdichten und vor dem Aushärten mit Bürsten bearbeitet und dabei strukturiert und/oder aufgeraut und/oder geglättet und/oder Überstände an den Rändern abgearbeitet werden.

21. Betonstein oder Betonplatte, erhältlich nach einem Verfahren gemäß einem der Ansprüche 1 bis 20.

## Claims

1. A method for manufacturing concrete elements which comprise at least one concrete layer, in which method concrete is filled into a mold for at least one element, the concrete is compacted by means of vibration and/or by means of plungers and subsequently cures, wherein at least one portion of a granular material is applied to the concrete layer by means of an application device before compacting, **characterized in that** the concrete filled into the mold has a water-binder value (w/b value) of 0.31 to 0.45 before curing and the granular material used is a material containing (a) a scattering component having an average grain diameter of 0.1 to 5 mm in an amount of 75 to 85 wt.% and (b) binder in an amount of 15 to 25 wt.%, in each case based on the total composition of the granular material,
wherein the granular material has a water-binder value (w/b value) of 0.24 to 0.38 before application to the concrete layer,
wherein the concrete layer is a facing concrete layer, and
wherein the concrete element comprises at least one further concrete layer.

2. The method according to claim 1, **characterized in that** the concrete element is a concrete block, a concrete slab or a concrete step.

3. The method according to any of the preceding claims,
**characterized in that** the concrete filled into the mold has a water-binder value (w/b value) of 0.35 to 0.40 before curing.

4. The method according to any of the preceding claims,
**characterized in that** the cement content in the concrete layer is 15 to 25 wt.%, particularly 17.5 to 20.5 wt.%, based on the total composition of the concrete layer.

5. The method according to any of the preceding claims,
**characterized in that** the binder contained in the granular material is an inorganic binder such as cement, hydraulic lime, gypsum or water glass.

6. The method according to any of claims 1 to 4, **characterized in that** the binder contained in the granular material is an organic binder such as plastics dispersions, acrylate resins, alkyd resins, epoxy resins, polyurethanes, SolGel resins or silicone resin emulsions.

7. The method according to any of claims 1 to 4, **characterized in that** a scattering component having an average grain diameter of 0.1 to 1.8 mm is used as the scattering component and/or the water-binder value (w/b value) of the granular material is 0.24 to 0.33.

8. The method according to any of claims 1 to 4, or 6, **characterized in that** a scattering component having an average grain diameter of 1.2 to 5 mm is used as the scattering component, the binder is contained in the granular material in an amount of 15 to 20 wt.%, based on the total composition of the granular material, and/or the water-binder value (w/b value) of the granular material is 0.28 to 0.38.

9. The method according to any of claims 1 to 7, **characterized in that** a scattering component having an average grain diameter of 0.1 to 1.2 mm is used as the scattering component.

10. The method according to any of the preceding claims,
**characterized in that** the further concrete layer is a raw concrete layer.

11. The method according to any of the preceding claims,
**characterized in that** the concrete contains concrete additives such as granulated slag, pozzolan, fly ash, limestone, coal fly ash and/or silica dust.

12. The method according to any of the preceding claims, **characterized in that** the facing concrete layer has an optical property such as color or gloss level and the granular material has an optical property differing therefrom.

13. The method according to any of the preceding claims,
**characterized in that** the granular material is applied by scattering or throwing.

14. The method according to any of the preceding claims,
**characterized in that** the granular material is applied to the concrete layer by means of an application device, wherein the application device comprises at least a trickling device, a centrifugal disc, a throwing arm and/or a catapult, to which at least one portion of the granular material is fed.

15. The method according to any of the preceding claims,
**characterized in that** the application device comprises at least one metering container containing granular material and having a metering strip, wherein the metering container is guided over the mold at a consistent or inconsistent speed.

16. The method according to any of the preceding claims,
**characterized in that** the application device comprises at least one pipe connection to which one or more portions of a granular material are fed and through which they are scattered, thrown, shot and/or dropped onto the concrete layer.

17. The method according to any of the preceding claims,
**characterized in that** the scattering material is or contains a rock mixture.

18. The method according to any of the preceding claims,
**characterized in that** the scattering material contains at least material selected from the group consisting of semi-precious stones, precious stones, mica, metal shavings, glass and plastics particles.

19. The method according to any of the preceding claims,
**characterized in that** a sealing and/or impregnating agent is applied to the surface of the concrete blocks or concrete slabs after compacting.

20. The method according to any of the preceding claims, **characterized in that** the surfaces and/or the edges of the concrete blocks or concrete slabs are machined using brushes after compacting and before curing, and are thereby structured and/or roughened and/or smoothed and/or protrusions at the edges are machined off.

21. A concrete block or concrete slab which can be obtained by a method according to any of claims 1 to 20.

## Revendications

1. Procédé de fabrication d'éléments en béton qui présentent au moins une couche de béton, dans lequel du béton est chargé dans un moule pour au moins un élément, le béton est compacté par vibration et/ou au moyen d'un poinçon, puis durci, dans lequel au moins une portion d'un matériau granulaire est appliquée sur la couche de béton à l'aide d'un applicateur avant le compactage, **caractérisé en ce que** le béton chargé dans le moule avant le durcissement présente une valeur eau/liant (valeur w/b) de 0,31 à 0,45 et, en guise de matériau granulaire, il est utilisé un matériau contenant (a) un composant d'épandage ayant un diamètre de grain moyen de 0,1 à 5 mm en une quantité de 75 à 85 % en poids et (b) un liant en une quantité de 15 à 25 % en poids, à chaque fois par rapport à la composition totale du matériau granulaire,
dans lequel le matériau granulaire présente, avant l'application sur la couche de béton, une valeur eau/liant (valeur w/b) de 0,24 à 0,38,
dans lequel la couche de béton est une couche de béton de parement, et
dans lequel l'élément en béton présente au moins une couche de béton supplémentaire.

2. Procédé selon la revendication 1, **caractérisé en ce que** l'élément en béton est un bloc de béton, une dalle en béton ou une marche en béton.

3. Procédé selon l'une des revendications précédentes,
**caractérisé en ce que** le béton chargé dans le moule avant le durcissement présente une valeur eau/liant (valeur w/b) de 0,35 à 0,40.

4. Procédé selon l'une des revendications précédentes,
**caractérisé en ce que** la proportion de ciment dans la couche de béton est de 15 à 25 % en poids, en particulier de 17,5 à 20,5 % en poids, par rapport à la composition totale de la couche de béton.

5. Procédé selon l'une des revendications précédentes,
**caractérisé en ce que** le liant contenu dans le matériau granulaire est un liant inorganique comme le ciment, la chaux hydraulique, le plâtre ou le verre soluble.

6. Procédé selon l'une des revendications 1 à 4, **caractérisé en ce que** le liant contenu dans le matériau granulaire est un liant organique comme des dispersions de matière plastique, des résines acryliques, des résines alkydes, des résines époxydes, des polyuréthannes, des résines sol-gel ou des émulsions de résine silicone.

7. Procédé selon l'une des revendications 1 à 4, **caractérisé en ce qu'**un composant d'épandage ayant un diamètre de grain moyen de 0,1 à 1,8 mm est utilisé comme composant d'épandage et/ou la valeur eau/liant (valeur w/b) du matériau granulaire est de 0,24 à 0,33.

8. Procédé selon l'une des revendications 1 à 4 ou 6,
**caractérisé en ce qu'**un composant d'épandage ayant un diamètre de grain moyen de 1,2 à 5 mm est utilisé comme composant d'épandage, le liant dans le matériau granulaire est présent en une quantité de 15 à 20 % en poids, par rapport à la composition totale du matériau granulaire, et/ou la valeur eau/liant (valeur w/b) du matériau granulaire est de 0,28 à 0,38.

9. Procédé selon l'une des revendications 1 à 7, **caractérisé en ce qu'**un composant d'épandage ayant un diamètre de grain moyen de 0,1 à 1,2 mm est utilisé comme composant d'épandage.

10. Procédé selon l'une des revendications précédentes, **caractérisé en ce que** la couche de béton supplémentaire est une couche de béton brut.

11. Procédé selon l'une des revendications précédentes,
**caractérisé en ce que** le béton contient des adjuvants pour béton comme du laitier granulé, de la pouzzolane, des cendres volantes, du calcaire, des cendres volantes de houille et/ou de la fumée de silice.

12. Procédé selon l'une des revendications précédentes,
**caractérisé en ce que** la couche de béton de parement présente une propriété optique comme la couleur ou le degré de brillance et le matériau granulaire présente une propriété optique différente de celle-ci.

13. Procédé selon l'une des revendications précédentes, **caractérisé en ce que** le matériau granulaire est appliqué par épandage ou par projection.

14. Procédé selon l'une des revendications précédentes,
**caractérisé en ce que** le matériau granulaire est appliqué sur la couche de béton à l'aide d'un applicateur, dans lequel l'applicateur présente au moins un dispositif de ruissellement, un disque d'épandage, un bras de projection et/ou une catapulte auxquels est acheminée au moins une portion du matériau granulaire.

15. Procédé selon l'une des revendications précédentes, **caractérisé en ce que** l'applicateur présente au moins un récipient doseur contenant un matériau granulaire et comportant une lame doseuse, dans lequel le récipient doseur est guidé au-dessus du moule à une vitesse constante ou irrégulière.

16. Procédé selon l'une des revendications précédentes, **caractérisé en ce que** l'applicateur présente au moins un manchon tubulaire auquel une ou plusieurs portions d'un matériau granulaire sont acheminées et à travers lequel ces portions sont épandues, projetées, jetées et/ou larguées sur la couche de béton.

17. Procédé selon l'une des revendications précédentes,
**caractérisé en ce que** le matériau d'épandage est ou contient un mélange minéral.

18. Procédé selon l'une des revendications précédentes,
**caractérisé en ce que** le matériau d'épandage contient au moins un matériau choisi parmi le groupe constitué par pierres semi-précieuses, pierres précieuses, mica, copeaux métalliques, verre et particules de matière plastique.

19. Procédé selon l'une des revendications précédentes,
**caractérisé en ce qu'**un agent de scellement et/ou d'imprégnation sont appliqués sur la surface des blocs de béton ou des dalles en béton après le compactage.

20. Procédé selon l'une des revendications précédentes, **caractérisé en ce que** les surfaces et/ou les bords des blocs de béton ou des dalles en béton sont traités par des brosses après le compactage et avant le durcissement et ainsi structurés et/ou rendus rugueux et/ou lissés et/ou des saillies au niveau des bords sont traitées.

21. Bloc de béton ou dalle en béton pouvant être obtenu(e) par un procédé selon l'une des revendications 1 à 20.
